(19)

**Europäisches Patentamt**
**European Patent Office**
**Office européen des brevets**

(11) **EP 4 692 394 A1**

(12) **EUROPEAN PATENT APPLICATION**
published in accordance with Art. 153(4) EPC

(43) Date of publication:
**11.02.2026 Bulletin 2026/07**

(21) Application number: 23930907.3

(22) Date of filing: 12.12.2023

(51) International Patent Classification (IPC):
*C22C 38/00* (2006.01)   *C21D 9/48* (2006.01)
*C22C 38/06* (2006.01)

(52) Cooperative Patent Classification (CPC):
**C21D 9/48; C22C 38/00; C22C 38/06**

(86) International application number:
**PCT/JP2023/044529**

(87) International publication number:
**WO 2024/202286 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 24.03.2023 JP 2023048367

(71) Applicant: NIPPON STEEL CORPORATION
Chiyoda-ku
Tokyo 100-8071 (JP)

(72) Inventors:
• **KATSUMARU, Keita**
  **Tokyo 100-8071 (JP)**
• **NONO, Michihiro**
  **Tokyo 100-8071 (JP)**
• **OKA, Masaharu**
  **Tokyo 100-8071 (JP)**
• **DAIROKUNO, Yuta**
  **Tokyo 100-8071 (JP)**

(74) Representative: J A Kemp LLP
**80 Turnmill Street**
**London EC1M 5QU (GB)**

(54) **STEEL PLATE**

(57)    A steel sheet with which excellent drawability is obtained and which can suppress the occurrence of burrs during a trimming process is provided. A steel sheet of the present embodiment contains, in mass%, C: 0.010 to 0.100%, Si: 0.350% or less, Mn: 1.00% or less, P: 0.070% or less, S: 0.025% or less, sol. Al: 0.005 to 0.100%, N: 0.0060% or less, and B: 0.50 to 2.50 times a content of N, with the balance being Fe and impurities, in which a number density ND of cementite particles having an area of 0.30 $\mu m^2$ or more is 1150 /$m^2$ or more and less than 7000 /$mm^2$.

FIG.2

EP 4 692 394 A1

**Description**

TECHNICAL FIELD

The present disclosure relates to a steel sheet, and more particularly relates to a steel sheet that is suitable for application to drawn cans. In the present description, the term "drawn cans" means cans formed by drawing and cans formed by drawing and ironing.

BACKGROUND ART

Battery cans, as typified by secondary battery cans, are produced by subjecting a steel sheet or a plated steel sheet to drawing or drawing and ironing. Therefore, a steel sheet used as a starting material for such drawn cans needs to have excellent drawability.

A steel sheet that is excellent in drawability is proposed in International Application Publication No. WO2016/060248 (Patent Literature 1). Patent Literature 1 discloses a steel sheet for drawn cans which has a chemical composition containing, in mass%, C: more than 0.150 to 0.260%, sol. Al: 0.005 to 0.100%, B: 0.0005 to 0.02%, Si: 0.50% or less, Mn: 0.70% or less, P: 0.070% or less, S: 0.05% or less, N: 0.0080% or less, Nb: 0.003% or less, and Ti: 0.003% or less, with the balance being Fe and impurities. In this steel sheet, in addition, a content of boron and a content of nitrogen in the chemical composition satisfy the relation, in mass%, $0.4 \leq B/N \leq 2.5$. This steel sheet includes ferrite having an average particle diameter of 2.7 to 4.0 $\mu$m and particulate cementite as the microstructure. When the steel sheet is subjected to an aging treatment at 100 °C for one hour and thereafter a tensile test is performed in which the tensile direction is parallel to the rolling elongation direction, with respect to the obtained tensile test results, when the yield strength is defined as "YP" in units of MPa, the total elongation is defined as "EL" in units of %, the elongation at yield point is defined as "YP-EL" in units of %, and the yield ratio is defined as "YR" in units of %, YP is 360 to 430 MPa, EL is 25 to 32%, YP-EL is 0%, and YR is 80 to 87%. The content of C in the steel sheet of Patent Literature 1 is higher than in conventional steel sheets, and furthermore the steel sheet of Patent Literature 1 contains B. By this means, excellent drawability is obtained.

CITATION LIST

PATENT LITERATURE

Patent Literature 1: International Application Publication No. WO2016/060248

SUMMARY OF INVENTION

TECHNICAL PROBLEM

In this connection, when a drawn can product is formed by subjecting a steel sheet to drawing, a flange portion is formed on the drawn can after the drawing. The flange portion is an unwanted portion as a drawn can product. Therefore, after drawing, the flange portion is removed by a trimming process. During the trimming process, in some cases burrs may occur on the cut edge of the drawn can after the flange portion is cut off. If a battery is produced using a drawn can on which a burr of such kind has occurred, in some cases the burr may penetrate into the interior of the drawn can. Such kind of burrs reduce the battery characteristics. Therefore, it is preferable if the occurrence of burrs can be suppressed in the trimming process after drawing. In Patent Literature 1, there is no discussion regarding means for suppressing the occurrence of burrs during a trimming process.

An objective of the present disclosure is to provide a steel sheet with which excellent drawability is obtained and which can suppress the occurrence of burrs during a trimming process.

SOLUTION TO PROBLEM

A steel sheet of the present disclosure consists of, in mass%,

C: 0.010 to 0.100%,
Si: 0.350% or less,
Mn: 1.00% or less,
P: 0.070% or less,
S: 0.025% or less,
sol. Al: 0.005 to 0.100%,

N: 0.0060% or less, and
B: 0.50 to 2.50 times a content of N,
with the balance being Fe and impurities,
wherein:
a number density ND of cementite particles having an area of 0.30 $\mu m^2$ or more is 1150 /mm$^2$ or more and less than 7000 /mm$^2$.

ADVANTAGEOUS EFFECTS OF INVENTION

According to the steel sheet of the present embodiment, excellent drawability is obtained, and the occurrence of burrs during a trimming process can be suppressed.

BRIEF DESCRIPTION OF DRAWINGS

[FIG. 1A] FIG. 1A is a perspective view of a cylindrical can obtained by performing cylindrical deep drawing in a drawability evaluation test in the examples.
[FIG. 1B] FIG. 1B is a side view of the cylindrical can in FIG. 1A.
[FIG. 2] FIG. 2 is a cross-sectional photograph of an edge of a cut end surface after a trimming process in a trimming process test in the examples.
[FIG. 3] FIG. 3 is a cross-sectional photograph of an edge of a cut end surface after a trimming process in a trimming process test in the examples, that is different from FIG. 2.

DESCRIPTION OF EMBODIMENTS

First, the present inventors have conducted studies regarding the chemical composition of a steel sheet that is suitable for application to drawn cans. As a result, the present inventors have considered that a chemical composition containing, in mass%, C: 0.010 to 0.100%, Si: 0.350% or less, Mn: 1.00% or less, P: 0.070% or less, S: 0.025% or less, sol. Al: 0.005 to 0.100%, and N: 0.0060% or less, with the balance being Fe and impurities is appropriate as the chemical composition of the steel sheet.
In addition, the present inventors have conducted studies regarding means for obtaining excellent drawability and which is also capable of suppressing the occurrence of burrs during a trimming process. As is also proposed in Patent Literature 1, boron (B) randomizes the texture of a steel sheet, and thereby brings the r-value (Lankford value) that is the plastic strain ratio close to 1. By this means, earing properties are enhanced, and drawability improves. In addition, if the earing properties are enhanced, a flange will be uniformly formed during drawing. Therefore, it is considered that it will be difficult for burrs to occur during the trimming process.
Therefore the present inventors have considered that if the aforementioned chemical composition also contains B so as to be made a chemical composition that contains, in mass%, C: 0.010 to 0.100%, Si: 0.350% or less, Mn: 1.00% or less, P: 0.070% or less, S: 0.025% or less, sol. Al: 0.005 to 0.100%, N: 0.0060% or less, and B: 0.50 to 2.50 times the content of N, with the balance being Fe and impurities, burrs will be suppressed during a trimming process.
However, even in the case of a steel sheet having the chemical composition described above, the occurrence of burrs during a trimming process could not be sufficiently suppressed. Therefore, the present inventors conducted further studies. As a result, the present inventors have discovered that if the number density of coarse cementite particles in a steel sheet is high, the occurrence of burrs during a trimming process is suppressed. Therefore, the present inventors conducted further studies regarding the relation between the size and number density of cementite particles and the occurrence frequency of burrs. As a result, the present inventors have discovered that in a steel sheet having the chemical composition described above, if the number density ND of cementite particles having an area of 0.30 $\mu m^2$ or more is 1150 /mm$^2$ or more, the occurrence of burrs can be sufficiently suppressed when a trimming process is performed.
On the other hand, it has been revealed that if the number density ND of cementite particles having an area of 0.30 $\mu m^2$ or more is too high, drawability will decrease. Therefore, the present inventors further investigated the relation between the number density ND of cementite particles having an area of 0.30 $\mu m^2$ or more and drawability. As a result, the present inventors have discovered that if the number density ND of cementite particles having an area of 0.30 $\mu m^2$ or more is less than 7000 /mm$^2$, excellent drawability is obtained.
The gist of the steel sheet of the present embodiment, which has been completed based on the technical idea described above, is as follows.
A steel sheet according to a first aspect consists of, in mass%,

C: 0.010 to 0.100%,
Si: 0.350% or less,
Mn: 1.00% or less,
P: 0.070% or less,
S: 0.025% or less,
sol. Al: 0.005 to 0.100%,
N: 0.0060% or less, and
B: 0.50 to 2.50 times a content of N,
with the balance being Fe and impurities,
wherein:
a number density ND of cementite particles having an area of 0.30 $\mu m^2$ or more is 1150 /$mm^2$ or more and less than 7000 /$mm^2$.

A steel sheet according to a second aspect is in accordance with the steel sheet of the first aspect, wherein, in addition:
one type of plated layer selected from a group consisting of an Ni plated layer, an Ni diffusion plated layer, an Ni alloy plated layer, and an Ni alloy diffusion plated layer is formed on a surface of the steel sheet.

Hereunder, the steel sheet according to the present embodiment is described in detail. The symbol "%" in relation to elements means "mass percent" unless otherwise stated.

[Features of steel sheet of the present embodiment]

The steel sheet of the present embodiment satisfies the following feature 1 and feature 2.

(Feature 1)

The chemical composition contains, in mass%, C: 0.010 to 0.100%, Si: 0.350% or less, Mn: 1.00% or less, P: 0.070% or less, S: 0.025% or less, sol. Al: 0.005 to 0.100%, N: 0.0060% or less, and B: 0.50 to 2.50 times a content of N, with the balance being Fe and impurities.

(Feature 2)

A number density ND of cementite particles having an area of 0.30 $\mu m^2$ or more is 1150 /$mm^2$ or more and less than 7000 /$mm^2$.

Feature 1 and feature 2 are described hereunder.

[(Feature 1) Regarding chemical composition]

The chemical composition of the steel sheet according to the present embodiment contains the following elements.

C: 0.010 to 0.100%

Carbon (C) increases the strength of the steel sheet. If the content of C is less than 0.010%, the aforementioned advantageous effect will not be sufficiently obtained. On the other hand, if the content of C is more than 0.100%, coarse carbides will excessively form. In such case, the machinability of the steel sheet will decrease. Therefore, the content of C is 0.010 to 0.100%.

A preferable lower limit of the content of C is 0.015%, more preferably is 0.020%, and further preferably is 0.025%.

A preferable upper limit of the content of C is 0.090%, more preferably is 0.080%, and further preferably is 0.070%.

A preferable range of the content of C is, for example, 0.015 to 0.090%, more preferably is 0.020 to 0.080%, and further preferably is 0.025 to 0.070%.

Si: 0.350% or less

Silicon (Si) is an impurity that is unavoidably contained. In other words, the content of Si is more than 0%. Si reduces the plating close-attachment of the steel sheet. Si also reduces the paint close-attachment of the steel sheet after can manufacturing. Therefore, the content of Si is 0.350% or less.

The content of Si is preferably as low as possible. However, excessively reducing the content of Si will raise the production cost. Therefore, taking into consideration normal industrial production, a preferable lower limit of the content of Si is 0.001%, more preferably is 0.002%, and further preferably is 0.005%.

A preferable upper limit of the content of Si is 0.250%, more preferably is 0.100%, further preferably is 0.050%, and further preferably is 0.030%.

A preferable range of the content of Si is, for example, 0.001 to 0.250%, more preferably is 0.002 to 0.100%, further preferably is 0.005 to 0.050%, and further preferably is 0.005 to 0.030%.

Mn: 1.00% or less

Manganese (Mn) is an impurity that is unavoidably contained. In other words, the content of Mn is more than 0%. Mn excessively increases the number density of coarse cementite particles. Therefore, the steel sheet hardens. As a result, the drawability of the steel sheet decreases. Therefore, the content of Mn is 1.00% or less.

The content of Mn is preferably as low as possible. However, excessively reducing the content of Mn will raise the production cost. Therefore, taking into consideration normal industrial production, a preferable lower limit of the content of Mn is 0.01%, more preferably is 0.02%, and further preferably is 0.05%.

A preferable upper limit of the content of Mn is 0.90%, more preferably is 0.80%, and further preferably is 0.70%.

A preferable range of the content of Mn is, for example, 0.01 to 0.90%, more preferably is 0.02 to 0.80%, and further preferably is 0.05 to 0.70%.

P: 0.070% or less

Phosphorus (P) is an impurity that is unavoidably contained. In other words, the content of P is more than 0%. P reduces the drawability of the steel sheet. Therefore, the content of P is 0.070% or less.

The content of P is preferably as low as possible. However, excessively reducing the content of P will raise the production cost. Therefore, taking into consideration normal industrial production, a preferable lower limit of the content of P is 0.001%, more preferably is 0.002%, and further preferably is 0.005%.

A preferable upper limit of the content of P is 0.060%, more preferably is 0.050%, and further preferably is 0.040%.

A preferable range of the content of P is, for example, 0.001 to 0.060%, more preferably is 0.002 to 0.050%, and further preferably is 0.005 to 0.040%.

S: 0.025% or less

Sulfur (S) is an impurity that is unavoidably contained. In other words, the content of S is more than 0%. S reduces the hot workability of the steel sheet, and causes cracks to occur in the steel sheet during hot working. Therefore, the content of S is 0.025% or less.

The content of S is preferably as low as possible. However, excessively reducing the content of S will raise the production cost. Therefore, taking into consideration normal industrial production, a preferable lower limit of the content of S is 0.001%, more preferably is 0.002%, and further preferably is 0.005%.

A preferable upper limit of the content of S is 0.020%, more preferably is 0.015%, and further preferably is 0.012%.

A preferable range of the content of S is, for example, 0.001 to 0.020%, more preferably is 0.002 to 0.015%, and further preferably is 0.005 to 0.012%.

Sol. Al: 0.005 to 0.100%

Aluminum (Al) deoxidizes the steel. If the content of sol. Al is less than 0.005%, the aforementioned advantageous effect will not be sufficiently obtained. On the other hand, if the content of sol. Al is more than 0.100%, coarse nitrides and/or oxides will form and the drawability of the steel sheet will decrease. Therefore, the content of sol. Al is 0.005 to 0.100%.

A preferable lower limit of the content of sol. Al is 0.010%, more preferably is 0.015%, and further preferably is 0.020%.

A preferable upper limit of the content of sol. Al is 0.090%, more preferably is 0.080%, and further preferably is 0.070%.

A preferable range of the content of sol. Al is, for example, 0.010 to 0.090%, more preferably is 0.015 to 0.080%, and further preferably is 0.020 to 0.070%.

Note that, the term "sol. Al" means "acid-soluble Al".

N: 0.0060% or less

Nitrogen (N) is an impurity that is unavoidably contained. In other words, the content of N is more than 0%. N subjects the steel sheet to age hardening and thereby reduces the drawability. N also causes stretcher strain. Therefore, the content of N is 0.0060% or less.

The content of N is preferably as low as possible. However, excessively reducing the content of N will raise the production cost. Therefore, taking into consideration normal industrial production, a preferable lower limit of the content of N is 0.0001%, more preferably is 0.0005%, and further preferably is 0.0010%.

A preferable upper limit of the content of N is 0.0055%, more preferably is 0.0050%, and further preferably is 0.0045%.

A preferable range of the content of N is, for example, 0.0001 to 0.0055%, more preferably is 0.0005 to 0.0050%, and further preferably is 0.0010 to 0.0045%.

B: 0.50 to 2.50 times the content of N

Boron (B) combines with N to form BN, and thereby reduces the amount of dissolved N in the steel sheet. By this means, age hardening by dissolved N is suppressed. In addition, B randomizes the texture of the steel sheet, and thereby brings the r-value (Lankford value) that is the plastic strain ratio close to 1 and enhances the earing properties. Consequently, the drawability is enhanced. Furthermore, the occurrence of burrs during a trimming process is suppressed. If the content of B is less than 0.50 times the content of N, the aforementioned advantageous effects will not be sufficiently obtained. On the other hand, if the content of B is more than 2.50 times the content of N, the amount of dissolved B will be excessively large in the steel sheet. In such case, the steel sheet will harden and the earing properties will decrease. B also suppresses coarsening of cementite particles. Hence, it will not be possible to sufficiently suppress the occurrence of burrs during a trimming process. Therefore, the content of B is 0.50 to 2.50 times the content of N.

A preferable lower limit of the content of B is 0.55 times the content of N, more preferably is 0.60 times the content of N, and further preferably is 0.65 times the content of N.

A preferable upper limit of the content of B is 2.45 times the content of N, more preferably is 2.40 times the content of N, and further preferably is 2.35 times the content of N.

A preferable range of the content of B is, for example, 0.55 to 2.45 times the content of N, more preferably is 0.60 to 2.40 times the content of N, and further preferably is 0.65 to 2.35 times the content of N.

The balance of the chemical composition of the steel sheet of the present embodiment is Fe and impurities. Here, the term "impurities" refers to substances which, when industrially producing the steel sheet, are mixed in from ore or scrap used as a raw material or from the production environment or the like, and which are allowed within a range that does not adversely affect the steel sheet of the present embodiment.

[Regarding impurities]

The chemical composition of the steel sheet of the present embodiment may also contain, in lieu of a part of Fe, one or more types of element selected from the group consisting of Nb: 0 to 0.003%, Ti: 0 to 0.003%, Cu: 0 to 0.50%, Ni: 0 to 0.50%, Cr: 0 to 0.30%, and Sn: 0 to 0.05%. The content of each of these elements may be 0%. Each of these elements is a so-called tramp element that may be contained in scrap that is a raw material, and each of these elements is an impurity.

[Method for measuring chemical composition of steel sheet]

The chemical composition of the steel sheet of the present embodiment can be measured by a well-known composition analysis method in accordance with JIS G0321: 2017. Specifically, a cutting tool such as a drill is used to collect a machined chip from the steel sheet. The collected machined chip is dissolved in acid to obtain a liquid solution. The liquid solution is subjected to ICP-MS (Inductively Coupled Plasma Mass Spectrometry) to perform elementary analysis of the chemical composition. The content of C and the content of S are determined by a well-known high-frequency combustion method (combustion-infrared absorption method). The content of N is determined using a well-known inert gas fusion-thermal conductivity method.

Note that, the content of each element is taken as a numerical value up to the least significant digit of the content of each element defined in the present embodiment that is obtained by rounding off a fraction of the measured numerical value based on the significant figures defined in the present embodiment. For example, the content of C in the steel material of the present embodiment is defined as a numerical value up to the third decimal place. Therefore, the content of C is taken as a numerical value up to the third decimal place that is obtained by rounding off the fourth decimal place of the measured numerical value.

Similarly, for the content of each element other than the content of C in the steel sheet of the present embodiment also, a value obtained by rounding off a fraction of the numerical value of the measured value up to the least significant digit defined in the present embodiment is taken as the content of the relevant element.

Note that, the term "rounding off" means rounding down if the fraction is less than 5, and rounding up if the fraction is 5 or more.

[Number density ND of coarse cementite particles]

In the steel sheet of the present embodiment, in addition, the number density ND of cementite particles having an area of 0.30 $\mu m^2$ or more is 1150 /$mm^2$ or more and less than 7000 /$mm^2$. In the following description, a cementite particle having an area of 0.30 $\mu m^2$ or more is also referred to as a "coarse cementite particle". Note that, an upper limit value of the area of a coarse cementite particle is not particularly limited. From the viewpoint of crystal growth, the area of a coarse cementite particle may be taken as, for example, 4.00 $\mu m^2$ or less.

Coarse cementite particles increase the peelability of swarf during a trimming process. Therefore, the coarse cementite particles suppress the occurrence of burrs during a trimming process. In order to sufficiently suppress the occurrence of burrs, it is effective to increase the number density of coarse cementite particles. In a steel sheet satisfying feature 1, if the number density ND of coarse cementite particles is *1150* /$mm^2$ or more, the coarse cementite particles can sufficiently suppress the occurrence of burrs during a trimming process.

On the other hand, if the number density ND of coarse cementite particles is too high, the drawability will decrease. Therefore, the number density ND of coarse cementite particles is to be 1150 /$mm^2$ or more and less than 7000 /$mm^2$.

A preferable lower limit of the number density ND of coarse cementite particles is 1400 /$mm^2$, more preferably is 1500 /$mm^2$, and further preferably is 1600 /$mm^2$.

A preferable upper limit of the number density ND of coarse cementite particles is 6100 /$mm^2$, and more preferably is 5500 /$mm^2$.

A preferable range of the number density ND of coarse cementite particles is, for example, 1400 to 6100 /$mm^2$, more preferably is 1500 to 5500 /$mm^2$, and further preferably is 1600 to 5500 /$mm^2$.

[Method for measuring number density ND of coarse cementite particles]

The number density ND of coarse cementite particles can be determined by the following method.

A sample is taken from an arbitrary position on the steel sheet. Among the surfaces of the sample, a cross section perpendicular to the rolling elongation direction of the steel sheet is defined as an observation surface. After polishing the observation surface of the sample, the observation surface is subjected to etching for 20 seconds using a 6% picral etching reagent (an etching reagent composed of 6 g of picric acid dissolved in 94 mL of ethanol). Using a scanning electron microscope (SEM), an arbitrary five observation regions (61 $\mu m \times$ 43 $\mu m$) on the etched observation surface are observed at an observation magnification of 2000×, and particles (precipitates and inclusions) within the observation regions are photographed to generate photographic images that are secondary electron images.

Based on the contrast in the aforementioned photographic images, cementite particles in the five observation regions are identified. The area of each identified cementite particle is calculated. Identification of the cementite particles based on the contrast, and calculation of the area of each cementite particle can be performed using well-known image processing. The image processing software is, for example, software with the product name "LUZEX AP MQ3104.0" made by Nireco Corporation.

The number density ND of coarse cementite particles (/$mm^2$) is determined based on the total number of coarse cementite particles having an area of 0.30 $\mu m^2$ or more identified in the five observation fields, and the total area of the five observation fields.

[Advantageous effects of steel sheet of present embodiment]

The steel sheet of the present embodiment satisfies feature 1 and feature 2. Therefore, according to the steel sheet of the present embodiment, excellent drawability is obtained and the occurrence of burrs during a trimming process can be sufficiently suppressed.

[Regarding preferable thickness of cold-rolled steel sheet of present embodiment]

The thickness of the cold-rolled steel sheet of the present embodiment is not particularly limited. The thickness of the cold-rolled steel sheet of the present embodiment is, for example, 0.15 to 1.00 mm.

[Microstructure of steel sheet of present embodiment]

The microstructure of the steel sheet of the present embodiment is mainly composed of ferrite and cementite. Specifically, in the microstructure of the steel sheet of the present embodiment, the total area fraction of ferrite and cementite is 95.0% or more. In the microstructure, structures other than ferrite and cementite are one or more types selected from the group consisting of pearlite, hard structures (martensite and bainite), retained austenite, and precipitates and inclusions other than cementite. In the microstructure, the total area fraction of structures other than ferrite and cementite is 5.0% or less.

[Method for observing microstructure of steel sheet]

The total area fraction of ferrite and cementite in the steel sheet of the present embodiment is determined by the following method.

A sample is taken from a central position of the thickness of the steel sheet. Among the surfaces of the sample, a cross section perpendicular to the rolling elongation direction of the steel sheet is defined as an observation surface. The observation surface of the sample is mirror-polished. The mirror-polished observation surface is subjected to etching using 3% nitric acid-alcohol (nital etching reagent). On the etched observation surface, an arbitrary five observation fields (61 $\mu$m $\times$ 43 $\mu$m) are observed using an SEM at a magnification of 2000$\times$.

In each observation field, ferrite and cementite can be easily distinguished from other structures by contrast. Ferrite is observed as a white region. Cementite is observed as grains with a lower brightness than ferrite. The area fraction (%) of ferrite and cementite is determined based on the total area of ferrite and cementite in the five observation fields and the total area of the five observation fields.

[Regarding Ni-based plated layer]

In the steel sheet of the present embodiment, an Ni-based plated layer may be formed on the surface of the steel sheet. The Ni-based plated layer is, for example, one type of plated layer selected from the group consisting of an Ni plated layer, an Ni diffusion plated layer, an Ni alloy plated layer, and an Ni alloy diffusion plated layer. An Ni plated layer is a plated layer that consists of Ni. An Ni diffusion plated layer is a plated layer in which Fe migrated from the steel sheet into the plated layer is diffused into a part or the whole of an Ni plated layer. That is, an Ni diffusion plated layer is a plated layer that contains Ni and Fe. An Ni alloy plated layer is a plated layer in which a part or the whole of an Ni plated layer has been replaced with an alloy layer of Ni and a well-known metallic element other than Fe. An Ni alloy diffusion plated layer is either one of an Ni alloy plated layer and a layer in which a part of an Ni plated layer has been replaced with a layer consisting of a well-known metal element other than Fe, in which Fe is diffused from the steel sheet into a part or the whole of the relevant layer.

Note that, in the steel sheet of the present embodiment, an Ni-based plated layer does not have to be formed on the surface of the steel sheet.

[Method for producing steel sheet of present embodiment]

An example of a method for producing the steel sheet of the present embodiment will now be described. A steel sheet that satisfies feature 1 and feature 2 may also be produced by a production method other than the production method described hereunder. However, the production method described hereunder is a preferable example of a method for producing the steel sheet according to the present embodiment.

One example of a method for producing the steel sheet of the present embodiment includes the following processes.

(Process 1) Starting material preparation process
(Process 2) Hot rolling process
(Process 3) Cold rolling process
(Process 4) Continuous annealing process
(Process 5) BAF annealing process

Process 1 to process 5 are described hereunder.

[(Process 1) Starting material preparation process]

In the starting material preparation process, a molten steel that satisfies feature 1 is produced. The produced molten steel is used to produce a starting material (slab) by a casting process. For example, the aforementioned molten steel is used to produce a slab by a well-known continuous casting process. The molten steel may be used to produce an ingot by an ingot-making process. A slab or an ingot that is a starting material for the steel sheet is prepared by the above production process.

[(Process 2) Hot rolling process]

In the hot rolling process, the slab or ingot is subjected to hot rolling to produce a hot-rolled steel sheet. The hot rolling process includes a rough rolling process of subjecting the slab or ingot to rough rolling to produce a sheet bar (intermediate steel sheet), and a finish rolling process of subjecting the sheet bar to finish rolling to produce a steel sheet.

In the rough rolling process, the starting material (slab or ingot) is heated. The heated starting material is rolled using a roughing mill to produce a sheet bar. The heating temperature of the starting material in the rough rolling process is, for example, 1000 to 1300°C.

In the finish rolling process, the sheet bar produced by the rough rolling process is subjected to further rolling (finish rolling) using a finish rolling mill to thereby produce a hot-rolled steel sheet. In the finish rolling process, the rolling finishing temperature is to be, for example, 800 to 1000°C, and the coiling temperature is to be, for example, 500 to 720°C.

[(Process 3) Cold rolling process]

In the cold rolling process, the hot-rolled steel sheet is subjected to cold rolling to produce a cold-rolled steel sheet. In the cold rolling process, for example, the accumulative rolling ratio is to be 80% or more. The upper limit of the accumulative rolling ratio is not particularly limited. However, when industrial productivity is taken into consideration, a preferable upper limit of the accumulative rolling ratio is 90%.

[(Process 4) Continuous annealing process]

In the continuous annealing process, a continuous annealing line is used to perform continuous annealing on the cold-rolled steel sheet after the cold rolling process, or on a cold-rolled steel sheet on which an Ni-based plated layer is formed after a plating process, which will be described later. In the continuous annealing process, continuous annealing is performed under the following conditions.

(Condition 1) Annealing temperature T0: 710 to 830°C
(Condition 2) Holding time t0 at annealing temperature T0: 6.5 to 32.0 seconds

If the annealing temperature T0 is 710 to 830°C and the holding time t0 is 6.5 to 32.0 seconds, recrystallization will be promoted in the cold-rolled steel sheet and cementite will form. As a result, in the microstructure of the produced steel sheet, the total area fraction of ferrite and cementite will be 95.0% or more. In addition, by forming a certain amount of cementite in the continuous annealing process, the number density ND of cementite particles having an area of 0.30 $\mu m^2$ or more in the produced steel sheet will become 1150 /$mm^2$ or more and less than 7000 /$mm^2$ by carrying out the BAF annealing process that is the next process.

If the BAF annealing process described hereunder were to be carried out without performing the continuous annealing process, the amount of cementite formed in the cold-rolled steel sheet before the BAF annealing process would be insufficient. Therefore, even if the BAF annealing process is performed, the number density ND of coarse cementite particles will be insufficient. Therefore, in the production method of the present embodiment, the continuous annealing process is performed before performing the BAF annealing process. Note that, in the continuous annealing process, the cold-rolled steel sheet after continuous annealing is coiled and cooled to 100°C or less.

[(Process 5) BAF annealing process]

The cold-rolled steel sheet at a temperature of 100°C or less after the continuous annealing process is subjected to BAF (box annealing furnace) annealing. BAF annealing is annealing that is also referred to as box annealing (or batch annealing). In the BAF annealing, annealing is performed under the following conditions.

(Condition 3) Heating rate HR1: 0.90 to 4.80°C/min
(Condition 4) Annealing temperature T1: 440 to 460°C
(Condition 5) Holding time t1: 460 to 490 mins
(Condition 6) Cooling rate CR1: 0.30°C/min or less

Hereunder, condition 3 to condition 6 are described.

[(Condition 3) Regarding heating rate HR1]

In the temperature rising process during the BAF annealing process, cementite formation sites are secured. If the heating rate HR1 is too fast, the ferrite structure in the steel sheet will coarsen, and the amount of cementite particle sites will decrease. If the heating rate HR is 4.80°C/min or less, recrystallization will proceed in the temperature rising process and a sufficient number of cementite formation sites can be secured. Consequently, in the produced steel sheet, the number density ND of cementite particles having an area of 0.30 $\mu m^2$ or more will be 1150 /$mm^2$ or more and less than 7000 /$mm^2$. Note that, the lower limit of the heating rate HR1 is not particularly limited. However, if the heating rate HR1 is too slow, the productivity will decrease. Therefore, a preferable lower limit of the heating rate HR1 is 0.90°C/min.

[(Condition 4 and Condition 5) Regarding annealing temperature T1 and holding time t1]

By setting the annealing temperature T1 in the range of 440 to 460°C and setting the holding time t1 in the range of 460 to 490 min, a sufficient number density of cementite particles will be formed. If the annealing temperature T1 is less than 440°C or the holding time t1 is less than 460 minutes, dissolved C will remain in the steel sheet. In such case, a sufficient number density ND of coarse cementite particles will not be obtained in the produced steel sheet. On the other hand, if the annealing temperature T1 is more than 460°C or the holding time t1 is more than 490 minutes, the ferrite structure will coarsen. In such case, the amount of cementite formation sites will decrease. As a result, a sufficient number density ND of coarse cementite particles will not be obtained.

[(Condition 6) Regarding cooling rate CR1]

The cooling process during the BAF annealing process allows the formed cementite particles to grow coarsely. If the cooling rate CR1 is more than 0.30°C/min, the cooling rate is too fast. In such case, the cementite particles will not grow sufficiently. Consequently, a sufficient number density ND of coarse cementite particles will not be obtained in the produced steel sheet. Therefore, the cooling rate CR1 is set to 0.30°C/min or less. The lower limit of the cooling rate CR1 is not particularly limited. However, if the cooling rate CR1 is too slow, the productivity will decrease. Therefore, a preferable lower limit of the cooling rate CR1 is 0.10°C/min.

The cold-rolled steel sheet after the BAF annealing is cooled to 100°C or less. The steel sheet of the present embodiment that satisfies feature 1 and feature 2 is produced by the above production process.

[Regarding optional production processes]

In the method for producing the steel sheet of the present embodiment, a temper rolling process and/or a plating process may also be performed. Hereunder, the temper rolling process and the plating process are described.

[Temper rolling process]

The temper rolling process is an optional process, and does not have to be performed. If performed, in the temper rolling process, the annealed steel sheet after the BAF annealing process is subjected to temper rolling (skin-pass rolling) to produce a steel sheet. The accumulative rolling ratio in the temper rolling is set to, for example, 0.5 to 5.0%. In the temper rolling process, the surface roughness of the steel sheet is adjusted, and the hardness of the steel sheet is adjusted.

[Plating process]

The plating process is an optional process, and does not have to be performed. If performed, the plating process may be performed after the BAF annealing process or after the temper rolling process. The plating process may also be performed at a stage that is after the cold rolling process and is before the continuous annealing process.

In the plating process, an Ni-based plated layer is formed on the surface of the steel sheet. A well-known method is employed as the method for forming the plated layer. For example, the cold-rolled steel sheet is immersed in a plating bath for forming the Ni-based plated layer, and electrolytic plating or electroless plating is performed. An Ni plated layer or Ni alloy plated layer that is a Ni-based plated layer is formed on the cold-rolled steel sheet by the above process.

If the plating process is performed after the BAF annealing process or after the temper rolling process, the produced steel sheet will have an Ni plated layer or an Ni alloy plated layer.

On the other hand, if the plating process is performed at a stage that is after the cold rolling process and is before the continuous annealing process, during the continuous annealing process, Fe of the steel sheet will diffuse into the Ni plated layer or Ni alloy plated layer formed on the cold-rolled steel sheet. Therefore, in such case the produced steel sheet will have an Ni diffusion plated layer or an Ni alloy diffusion plated layer.

EXAMPLES

Hereunder, advantageous effects of one aspect of the steel sheet of the present embodiment are described more specifically by way of examples.

Cold-rolled steel sheets having the chemical compositions shown in Table 1 were produced.

[Table 1]

TABLE 1

| Number | Chemical Composition (unit is mass%, the balance is Fe and impurities) | | | | | | | | |
|---|---|---|---|---|---|---|---|---|---|
| | C | Si | Mn | P | S | sol.Al | N | B | Others |
| 1 | 0.055 | 0.010 | 0.27 | 0.012 | 0.007 | 0.014 | 0.0028 | 0.0019 | - |
| 2 | 0.056 | 0.010 | 0.27 | 0.011 | 0.007 | 0.015 | 0.0033 | 0.0022 | - |
| 3 | 0.055 | 0.006 | 0.26 | 0.010 | 0.006 | 0.016 | 0.0021 | 0.0021 | - |
| 4 | 0.053 | 0.005 | 0.27 | 0.015 | 0.013 | 0.064 | 0.0023 | 0.0018 | - |
| 5 | 0.060 | 0.316 | 0.28 | 0.011 | 0.007 | 0.017 | 0.0036 | 0.0020 | - |
| 6 | 0.016 | 0.028 | 0.11 | 0.010 | 0.006 | 0.017 | 0.0021 | 0.0037 | - |
| 7 | 0.059 | 0.005 | 0.67 | 0.056 | 0.007 | 0.018 | 0.0027 | 0.0019 | - |
| 8 | 0.062 | 0.148 | 0.29 | 0.011 | 0.005 | 0.021 | 0.0021 | 0.0043 | - |
| 9 | 0.092 | 0.006 | 0.28 | 0.009 | 0.007 | 0.023 | 0.0011 | 0.0022 | - |
| 10 | 0.065 | 0.011 | 0.29 | 0.010 | 0.006 | 0.014 | 0.0024 | 0.0023 | Nb:0.002 |
| 11 | 0.051 | 0.009 | 0.30 | 0.007 | 0.004 | 0.020 | 0.0021 | 0.0016 | Ti:0.002 |
| 12 | 0.059 | 0.006 | 0.19 | 0.009 | 0.005 | 0.014 | 0.0022 | 0.0019 | Cu:0.43 |
| 13 | 0.042 | 0.007 | 0.28 | 0.032 | 0.009 | 0.012 | 0.0031 | 0.0029 | Ni:0.41 |
| 14 | 0.065 | 0.013 | 0.26 | 0.015 | 0.007 | 0.025 | 0.0028 | 0.0015 | Cr:0.21 |
| 15 | 0.034 | 0.020 | 0.31 | 0.006 | 0.005 | 0.022 | 0.0037 | 0.0019 | Sn:0.04 |
| 16 | 0.051 | 0.010 | 0.27 | 0.012 | 0.022 | 0.015 | 0.0020 | 0.0008 | - |
| 17 | 0.054 | 0.002 | 0.28 | 0.048 | 0.007 | 0.079 | 0.0022 | 0.0077 | - |
| 18 | 0.052 | 0.286 | 0.28 | 0.009 | 0.004 | 0.014 | 0.0019 | 0.0024 | - |
| 19 | 0.064 | 0.005 | 0.55 | 0.012 | 0.007 | 0.017 | 0.0019 | 0.0025 | - |
| 20 | 0.055 | 0.149 | 0.30 | 0.008 | 0.006 | 0.043 | 0.0020 | 0.0019 | - |
| 21 | 0.076 | 0.217 | 0.29 | 0.007 | 0.007 | 0.018 | 0.0029 | 0.0061 | - |
| 22 | 0.054 | 0.002 | 0.47 | 0.006 | 0.011 | 0.017 | 0.0019 | 0.0030 | - |
| 23 | 0.029 | 0.090 | 0.29 | 0.024 | 0.006 | 0.059 | 0.0024 | 0.0023 | - |
| 24 | 0.054 | 0.026 | 0.27 | 0.010 | 0.013 | 0.024 | 0.0018 | 0.0039 | - |
| 25 | 0.057 | 0.078 | 0.29 | 0.007 | 0.006 | 0.017 | 0.0042 | 0.0021 | - |
| 26 | 0.056 | 0.004 | 0.34 | 0.012 | 0.006 | 0.013 | 0.0019 | 0.0020 | - |
| 27 | 0.042 | 0.254 | 0.27 | 0.008 | 0.019 | 0.013 | 0.0037 | 0.0021 | - |
| 28 | 0.057 | 0.005 | 1.07 | 0.005 | 0.008 | 0.012 | 0.0023 | 0.0016 | - |

Specifically, each of the molten steels was subjected to continuous casting to produce a slab. The slab was subjected to a hot rolling process (rough rolling process and finish rolling process). The slab was heated to 1100 to 1250°C. After heating, the slab was rolled with a roughing mill to produce a sheet bar. Further, the sheet bar was rolled using a finish rolling mill to produce a hot-rolled steel sheet. The rolling finishing temperature was 850 to 940°C, and the coiling temperature was 500 to 720°C.

Each of the hot-rolled steel sheets was subjected to a cold rolling process to produce a cold-rolled steel sheet. The accumulative rolling ratio was 80 to 90%. The cold-rolled steel sheet was subjected to a continuous annealing process. The annealing temperature T0 (°C) and the holding time t0 (secs) in the continuous annealing process were as shown in Table 2. The cold-rolled steel sheet after the continuous annealing was coiled, and cooled to normal temperature (25°C).

[Table 2]

TABLE 2

| Number | Continuous Annealing Process | | BAF Annealing Process | | | |
|---|---|---|---|---|---|---|
| | Condition 1 | Condition 2 | Condition 3 | Condition 4 | Condition 5 | Condition 6 |
| | Annealing Temperature T0 (°C) | Holding Time t0 (secs) | Heating Rate HR1 (°C/min) | Annealing Temperature T1 (°C) | Holding Time t1 (mins) | Cooling Rate CR1 (°C/min) |
| 1 | 810 | 16.1 | 2.23 | 452 | 481 | 0.19 |
| 2 | 720 | 14.4 | 2.06 | 451 | 481 | 0.20 |
| 3 | 810 | 22.3 | 2.37 | 452 | 481 | 0.20 |
| 4 | 812 | 12.3 | 2.09 | 451 | 480 | 0.19 |
| 5 | 811 | 12.6 | 1.22 | 450 | 482 | 0.14 |
| 6 | 731 | 12.8 | 4.71 | 458 | 480 | 0.22 |
| 7 | 722 | 31.8 | 3.61 | 454 | 480 | 0.22 |
| 8 | 811 | 29.7 | 1.08 | 451 | 480 | 0.13 |
| 9 | 730 | 10.1 | 1.95 | 451 | 482 | 0.18 |
| 10 | 735 | 15.4 | 2.79 | 452 | 480 | 0.23 |
| 11 | 740 | 12.0 | 2.22 | 458 | 485 | 0.17 |
| 12 | 820 | 30.0 | 1.16 | 451 | 480 | 0.14 |
| 13 | 713 | 13.5 | 3.68 | 455 | 480 | 0.26 |
| 14 | 815 | 27.0 | 2.80 | 453 | 488 | 0.22 |
| 15 | 722 | 20.8 | 3.72 | 456 | 480 | 0.25 |
| 16 | 811 | 12.3 | 2.27 | 451 | 480 | 0.21 |
| 17 | 728 | 14.0 | 1.78 | 451 | 482 | 0.23 |
| 18 | 600 | 13.3 | 2.92 | 452 | 482 | 0.18 |
| 19 | 950 | 6.5 | 3.61 | 454 | 482 | 0.22 |
| 20 | 729 | 2.3 | 1.12 | 451 | 480 | 0.13 |
| 21 | 722 | 135.0 | 3.61 | 454 | 480 | 0.22 |
| 22 | 822 | 12.6 | 6.10 | 455 | 480 | 0.24 |
| 23 | 810 | 14.7 | 1.37 | 300 | 482 | 0.15 |
| 24 | 805 | 12.2 | 3.68 | 600 | 480 | 0.26 |
| 25 | 732 | 12.6 | 4.05 | 458 | 350 | 0.25 |

(continued)

| Number | Continuous Annealing Process | | BAF Annealing Process | | | |
| | Condition 1 | Condition 2 | Condition 3 | Condition 4 | Condition 5 | Condition 6 |
| | Annealing Temperature T0 (°C) | Holding Time t0 (secs) | Heating Rate HR1 (°C/min) | Annealing Temperature T1 (°C) | Holding Time t1 (mins) | Cooling Rate CR1 (°C/min) |
|---|---|---|---|---|---|---|
| 26 | 811 | 12.6 | 1.22 | 450 | 650 | 0.14 |
| 27 | 820 | 11.9 | 3.61 | 454 | 480 | 0.40 |
| 28 | 822 | 12.6 | 3.61 | 454 | 480 | 0.27 |

The steel sheet after cooling was subjected to a BAF annealing process. The heating rate HR1 (°C/min), annealing temperature T1 (°C), holding time t1 (mins) at the annealing temperature T1, and cooling rate CR1 (°C/min) in the BAF annealing were as shown in Table 2. The steel sheet after the BAF annealing was cooled to normal temperature.

The steel sheet after cooling was subjected to a temper rolling process. The accumulative rolling ratio in the temper rolling was set to 0.5 to 5.0%. A steel sheet of each test number was produced by the above production process. The thickness of each steel sheet was 0.30 mm.

[Evaluation tests]

The steel sheet of each test number was subjected to the following evaluation tests.

(Test 1) Test to measure number density ND of coarse cementite particles

(Test 2) Microstructure observation test

(Test 3) Drawability evaluation test

(Test 4) Trimming process test

Test 1 to test 4 are described hereunder.

[(Test 1) Test to measure number density ND of coarse cementite particles]

The number density ND ($/mm^2$) of coarse cementite particles in the steel sheet of each test number was determined in accordance with the method described above in the section [Method for measuring number density ND of coarse cementite particles]. The determined number density ND ($/mm^2$) is shown in Table 3.

[Table 3]

TABLE 3

| Number | Number Density ND of Coarse Cementite Particles ($/mm^2$) | Total Area Fraction of Ferrite and Cementite (%) | Drawability | Burr Occurrence Present/ Absent | Remarks |
|---|---|---|---|---|---|
| 1 | 1524 | 97.0 | EX | Absent | Inventive Example |
| 2 | 4953 | 96.1 | EX | Absent | Inventive Example |
| 3 | 4572 | 95.8 | EX | Absent | Inventive Example |
| 4 | 1905 | 96.7 | EX | Absent | Inventive Example |
| 5 | 2286 | 97.2 | EX | Absent | Inventive Example |
| 6 | 1410 | 95.2 | EX | Absent | Inventive Example |

(continued)

| Number | Number Density ND of Coarse Cementite Particles (/mm$^2$) | Total Area Fraction of Ferrite and Cementite (%) | Drawability | Burr Occurrence Present/ Absent | Remarks |
|---|---|---|---|---|---|
| 7 | 1600 | 95.7 | EX | Absent | Inventive Example |
| 8 | 3619 | 96.3 | EX | Absent | Inventive Example |
| 9 | 5334 | 98.0 | EX | Absent | Inventive Example |
| 10 | 2095 | 96.3 | EX | Absent | Inventive Example |
| 11 | 1714 | 98.3 | EX | Absent | Inventive Example |
| 12 | 1410 | 95.4 | EX | Absent | Inventive Example |
| 13 | 1486 | 95.7 | EX | Absent | Inventive Example |
| 14 | 5905 | 98.3 | EX | Absent | Inventive Example |
| 15 | 2324 | 96.6 | EX | Absent | Inventive Example |
| 16 | 6096 | 97.4 | B | Present | Comparative Example |
| 17 | 952 | 96.2 | EX | Present | Comparative Example |
| 18 | 914 | 95.7 | EX | Present | Comparative Example |
| 19 | 800 | 98.2 | EX | Present | Comparative Example |
| 20 | 762 | 96.9 | EX | Present | Comparative Example |
| 21 | 1067 | 97.3 | EX | Present | Comparative Example |
| 22 | 1029 | 96.0 | EX | Present | Comparative Example |
| 23 | 991 | 95.5 | EX | Present | Comparative Example |
| 24 | 1105 | 97.3 | EX | Present | Comparative Example |
| 25 | 838 | 96.9 | EX | Present | Comparative Example |
| 26 | 648 | 97.5 | EX | Present | Comparative Example |
| 27 | 724 | 95.3 | EX | Present | Comparative Example |
| 28 | 7201 | 97.2 | B | Absent | Comparative Example |

[(Test 2) Microstructure observation test]

The total area fraction (%) of ferrite and cementite in the steel sheet of each test number was determined in accordance with the method described above in the section [Method for observing microstructure of steel sheet]. The obtained total area fraction (%) is shown in Table 3. In each test number, the total area fraction of ferrite and cementite was 95.0% or more.

[(Test 3) Drawability evaluation test]

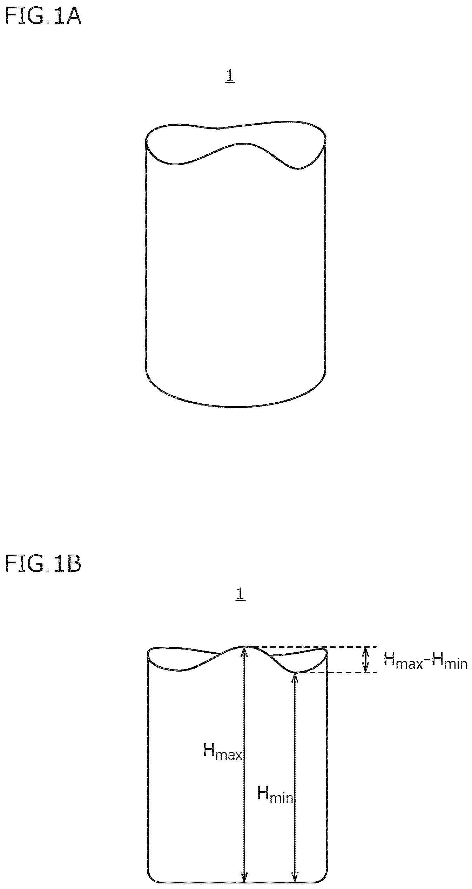

A disc-shaped test specimen was taken from the steel sheet of each test number. The thickness of the disc-shaped test specimen was 0.30 mm, and the diameter of the disc-shaped test specimen was 36.00 mm. The disc-shaped test specimen was subjected to cylindrical deep drawing using a punch having a diameter of 21.55 mm, to thereby produce a cylindrical can 1 illustrated in FIG. 1A. FIG. 1B is a side view of the cylindrical can 1 illustrated in FIG. 1A. Referring to FIG. 1B, in the obtained cylindrical can 1, a maximum value Hmax of the peak height (peak height of the earing) of the can side wall of the cylindrical can 1, and a minimum value Hmin of the can side wall (trough height) of the cylindrical can 1 were determined. In addition, heights of the can side wall of the cylindrical can 1 were measured over 360° at a pitch of 0.8°, and an average value Have of the measured heights was determined. The earing ratio was determined by the following formula using the obtained Hmax, Hmin, and Have.

$$\text{Earing ratio} = (\text{Hmax} - \text{Hmin})/\text{Have}$$

If the obtained earing ratio was 3.0% or less, it was determined that excellent drawability was obtained (indicated by "EX (Excellent)" in the column "Drawability" in Table 3). On the other hand, if the obtained earing ratio was more than 3.0%, it was determined that sufficient drawability was not obtained (indicated by "B (Bad)" in the column "Drawability" in Table 3).

[(Test 4) Trimming process test]

The steel sheet of each test number was subjected to a trimming process test by the following method, and the presence or absence of a burr after the trimming process was evaluated. Specifically, a disc-shaped test specimen was taken from the steel sheet of each test number. The diameter of the disc-shaped test specimen was 36.00 mm, and the thickness was 0.30 mm. The disc-shaped test specimen was subjected to drawing for forming a flanged cylinder, and a flanged cylinder in which the flange width was 5.00 mm was thereby prepared. The drawing ratio was 2.0. The obtained flanged cylinder was subjected to a trimming process in which the entire flange part was trimmed. A tool blade was used for trimming. The trimming allowance was set to 5.00 mm. Further, during the trimming process, a sheet pressing force of 5% of the maximum shearing load was applied.

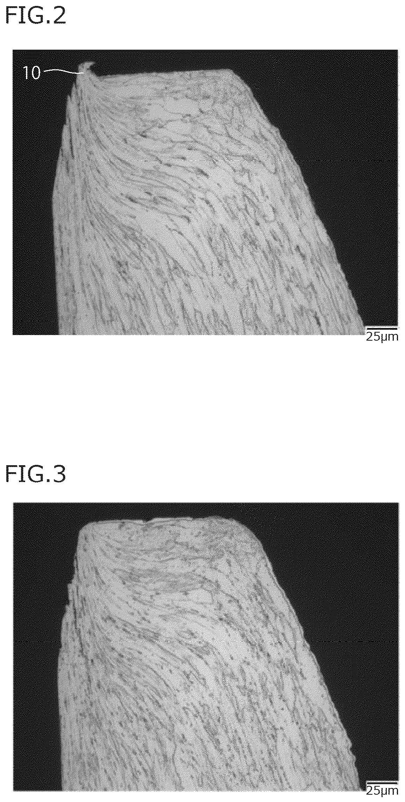

The cylinder whose flange had been trimmed was cut parallel to the axial direction. In the cross section, the edge of the cut end surface that was formed by the trimming process was observed with a scanning electron microscope (SEM) at a magnification of 200×, and the presence or absence of a burr at the edge was confirmed. If the presence of a burr 10 was confirmed at the edge cross section as shown in FIG. 2, it was determined that burrs were not sufficiently suppressed during the trimming process (indicated by "Present" in the column "Burr Occurrence Present/Absent" in Table 3). On the other hand, if the presence of a burr was not confirmed at the edge cross section as shown in FIG. 3, it was determined that burrs were sufficiently suppressed during the trimming process (indicated by "Absent" in the column "Burr Occurrence Present/Absent" in Table 3).

[Evaluation results]

Referring to Table 1 to Table 3, the steel sheets of Test Nos. 1 to 15 satisfied feature 1 and feature 2. Therefore, the occurrence of a burr was not confirmed in the trimming process test, and thus the occurrence of burrs was sufficiently suppressed during the trimming process.

On the other hand, in Test No. 16, the content of B was too low. Therefore, sufficient drawability was not obtained. Further, a burr was confirmed in the trimming process test.

In Test No. 17, the content of B was too high. Therefore, a burr was confirmed in the trimming process test.

In Test No. 18, the annealing temperature T0 in the continuous annealing process was too low. Therefore, the number density ND of coarse cementite particles was too small. As a result, a burr was confirmed in the trimming process test.

In Test No. 19, the annealing temperature T0 in the continuous annealing process was too high. Therefore, the number density ND of coarse cementite particles was too small. As a result, a burr was confirmed in the trimming process test.

In Test No. 20, the holding time t0 in the continuous annealing process was too short. Therefore, the number density ND of coarse cementite particles was too small. As a result, a burr was confirmed in the trimming process test.

In Test No. 21, the holding time t0 in the continuous annealing process was too long. Therefore, the number density ND of coarse cementite particles was too small. As a result, a burr was confirmed in the trimming process test.

In Test No. 22, the heating rate HR1 in the BAF annealing process was too fast. Therefore, the number density ND of coarse cementite particles was too small. As a result, a burr was confirmed in the trimming process test.

In Test No. 23, the annealing temperature T1 in the BAF annealing process was too low. Therefore, the number density ND of coarse cementite particles was too small. As a result, a burr was confirmed in the trimming process test.

In Test No. 24, the annealing temperature T1 in the BAF annealing process was too high. Therefore, the number density ND of coarse cementite particles was too small. As a result, a burr was confirmed in the trimming process test.

In Test No. 25, the holding time t1 in the BAF annealing process was too short. Therefore, the number density ND of coarse cementite particles was too small. As a result, a burr was confirmed in the trimming process test.

In Test No. 26, the holding time t1 in the BAF annealing process was too long. Therefore, the number density ND of coarse cementite particles was too small. As a result, a burr was confirmed in the trimming process test.

In Test No. 27, the cooling rate CR1 in the BAF annealing process was too fast. Therefore, the number density ND of coarse cementite particles was too small. As a result, a burr was confirmed in the trimming process test.

In Test No. 28, the content of Mn was too high. Therefore, the number density ND of coarse cementite particles was too large. As a result, the earing ratio in the drawability evaluation test was too high, and sufficient drawability was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

**Claims**

1. A steel sheet, consisting of, in mass%,

   C: 0.010 to 0.100%,
   Si: 0.350% or less,
   Mn: 1.00% or less,
   P: 0.070% or less,
   S: 0.025% or less,
   sol. Al: 0.005 to 0.100%,
   N: 0.0060% or less, and
   B: 0.50 to 2.50 times a content of N,
   with the balance being Fe and impurities,
   wherein:
   a number density ND of cementite particles having an area of 0.30 $\mu m^2$ or more is 1150 /mm$^2$ or more and less than 7000 /mm$^2$.

2. The steel sheet according to claim 1, wherein:
   one type of plated layer selected from a group consisting of an Ni plated layer, an Ni diffusion plated layer, an Ni alloy plated layer, and an Ni alloy diffusion plated layer is formed on a surface of the steel sheet.

FIG.1A

FIG.1B

FIG.2

FIG.3

## INTERNATIONAL SEARCH REPORT

| International application No. |
|---|
| **PCT/JP2023/044529** |

**A.     CLASSIFICATION OF SUBJECT MATTER**

*C22C 38/00*(2006.01)i; *C21D 9/48*(2006.01)i; *C22C 38/06*(2006.01)i
FI:    C22C38/00 301T; C21D9/48 H; C22C38/06

According to International Patent Classification (IPC) or to both national classification and IPC

**B.     FIELDS SEARCHED**

Minimum documentation searched (classification system followed by classification symbols)

C22C38/00; C21D9/48; C22C38/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2002-88446 A (TOYO KOHAN CO., LTD.) 27 March 2002 (2002-03-27)<br>entire text | 1, 2 |
| A | JP 2002-60900 A (NIPPON STEEL CORP.) 28 February 2002 (2002-02-28)<br>entire text | 1, 2 |
| A | WO 2018/194135 A1 (NIPPON STEEL & SUMITOMO METAL CORPORATION) 25 October 2018 (2018-10-25)<br>entire text | 1, 2 |
| A | WO 2018/180404 A1 (JFE STEEL CORP.) 04 October 2018 (2018-10-04)<br>entire text | 1, 2 |
| A | WO 2020/195605 A1 (NIPPON STEEL CORPORATION) 01 October 2020 (2020-10-01)<br>entire text | 1, 2 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/044529**

| Patent document cited in search report | | | Publication date (day/month/year) | Patent family member(s) | | | Publication date (day/month/year) |
|---|---|---|---|---|---|---|---|
| JP | 2002-88446 | A | 27 March 2002 | (Family: none) | | | |
| JP | 2002-60900 | A | 28 February 2002 | (Family: none) | | | |
| WO | 2018/194135 | A1 | 25 October 2018 | US | 2020/0048730 | A1 | |
| | | | | entire text | | | |
| | | | | EP | 3613867 | A1 | |
| | | | | KR | 10-2019-0131084 | A | |
| | | | | CN | 110573641 | A | |
| | | | | SG | 11201909620R | A | |
| | | | | JP | 6428986 | B1 | |
| WO | 2018/180404 | A1 | 04 October 2018 | US | 2020/0024681 | A1 | |
| | | | | entire text | | | |
| | | | | CN | 110462086 | A | |
| | | | | KR | 10-2019-0121810 | A | |
| | | | | TW | 201837199 | A | |
| | | | | JP | 6455640 | B1 | |
| | | | | PH | 12019550204 | A1 | |
| WO | 2020/195605 | A1 | 01 October 2020 | US | 2022/0025499 | A1 | |
| | | | | entire text | | | |
| | | | | EP | 3950974 | A1 | |
| | | | | CN | 113383097 | A | |
| | | | | KR | 10-2021-0107826 | A | |
| | | | | MX | 2021008992 | A | |
| | | | | JP | 7284428 | B2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016060248 A